# EUROPÄISCHE PATENTSCHRIFT

(11) **EP 2 158 143 B1**
(45) Veröffentlichungstag und Bekanntmachung des Hinweises auf die Patenterteilung: **16.03.2011**
(21) Anmeldenummer: 07726175.8
(22) Anmeldetag: 28.06.2007
(51) Int. Cl.: B65G 1/04, B65G 1/137

(54) **REGALBEDIENGERÄT ZUM EIN- UND AUSLAGERN UND KOMMISSIONIEREN VON STÜCKGUT SOWIE LAGERSYSTEM MIT ZUMINDEST EINEM DERARTIGEN REGALBEDIENGERÄT**
STORAGE AND RETRIEVAL UNIT FOR STORING AND RETRIEVING, AND ORDER-PICKING, ARTICLES, AND STORAGE SYSTEM HAVING AT LEAST ONE SUCH STORAGE AND RETRIEVAL UNIT
TRANSSTOCKEUR POUR CHARGER, DÉCHARGER ET PRÉPARER DES MARCHANDISES ET SYSTÈME DE STOCKAGE COMPRENANT AU MOINS UN TEL TRANSSTOCKEUR

(43) Veröffentlichungstag der Anmeldung: 03.03.2010
(73) Patentinhaber: Siemens Aktiengesellschaft, 80333 München (DE)
(72) Erfinder: TANCH, Gerhard, 74374 Zaberfeld (DE); WAGNER, Hans, 73730 Esslingen (DE)
(86) Internationale Anmeldenummer: PCT/EP2007/005748
(87) Internationale Veröffentlichungsnummer: WO 2009/000302

(56) Entgegenhaltungen:
- EP-A- 1 882 648
- WO-A-2005/061363
- DE-A1- 3 020 791
- DE-A1- 4 320 402
- GB-A- 1 254 387
- JP-A- 48 081 268
- JP-A- 60 232 314
- US-A- 5 927 926

## Beschreibung

Die Erfindung betrifft ein Regalbediengerät zum Ein- und Auslagern von Stückgut, insbesondere von Getränkekisten, wobei das Regalbediengerät ein Fahrwerk, eine damit verbundene Tragevorrichtung, eine an der Tragevorrichtung befestigte, in Vertikalrichtung verfahrbare Hubvorrichtung und zumindest ein auf der Hubvorrichtung angeordnetes, in Horizontalrichtung und quer zur Fahrtrichtung verfahrbares Teleskopelement aufweist. Das jeweilige Teleskopelement weist einen fest mit der Hubvorrichtung verbundenen Grundrahmen und einen relativ zum Grundrahmen verfahrbaren Endträger auf. An den gegenüberliegenden Enden des jeweiligen Endträgers ist jeweils zumindest ein Mitnehmer zum Schieben des ein- und auszulagernden Stückguts angeordnet. Das jeweilige Teleskopelement weist einen oberhalb des Grundrahmens angeordneten Abstellplatz zum Zwischenlagern des Stückguts auf.

Die Erfindung betrifft weiterhin ein Lagersystem für Stückgut, insbesondere für Getränkekisten, mit einem als Durchgangslager ausgebildeten und eine Vielzahl von Lagerkanälen aufweisenden Lagerbereich für das Stückgut, mit einem Anlieferungs- und Abholungsbereich, insbesondere für Paletten mit Getränkekisten, und zumindest einem kundenseitigen Aus- und Rückgabebereich für das Stückgut.

Aus dem deutschen Patent DE 44 06 056 C2 ist ein Getränketerminal zur automatischen Ausgabe von Getränkekisten bekannt. Der Getränketerminal besteht im Wesentlichen aus einem Liefer- und Lagerbereich, einem Zwischenlagerbereich und einem Verkaufsbereich. Der Liefer- und Lagerbereich weist ein Lieferterminal mit zwei Rollenbahnen auf, über die Paletten mit Getränkekisten dem Lagerbereich zugeführt bzw. abgezogen werden können. Die Rollenbahnen sind über ein erstes Regalbediengerät mit dem als Hochregal ausgebildeten Lagerbereich verbunden. Über das erste Regalbediengerät wird auch der Zwischenlagerbereich mit Getränkekisten aus dem Lagerbereich versorgt. Hierfür entnimmt das erste Regalbediengerät eine Palette mit Getränkekisten und übergibt diese an eine Vereinzelungsvorrichtung, von der die Getränkekisten von der Palette getrennt und hintereinander einem Förderband zugeführt werden. Von diesem Förderband übernimmt ein zweites Regalbediengerät eine oder mehrere Getränkekisten und führt diese dem Zwischenlagerbereich zu. Der Zwischenlagerbereich ist als Durchlaufregal mit mehreren Ebenen ausgebildet, bei dem jeder Lagerkanal die Getränkekisten einer Getränkesorte aufnimmt. Auf der Entnahmeseite schließt sich ein drittes Regalbediengerät an, von dem je nach Kundenwunsch die Getränkekisten in der gewünschten Getränkesorte aus dem Durchlaufregal entnommen und an eine Ausgabe-Rollenbahn übergeben werden.

In der zum Zeitpunkt der vorliegenden Anmeldung noch nicht veröffentlichten deutschen Patentanmeldung 10 2006 035 049.9 der Anmelderin ist ein Verfahren zum Ein- und Auslagern von Stückgütern, insbesondere von Getränkekisten, in ein beziehungsweise aus einem Lagersystem beschrieben. Das Lagersystem ist als Durchlauflager ausgebildet und weist einen Lagerbereich mit einer Vielzahl von Lagerkanälen für die Stückgüter auf. Weiterhin weist das Lagersystem eine Eingangsseite und eine Ausgangsseite auf, bei dem die Stückgüter von einem der Eingangsseite des Lagerbereichs zugeordneten ersten Regalbediengerät in die Lagerkanäle eingelagert werden. Nach erfolgtem Abzug von Stückgütern aus dem Lagerkanal mittels des ersten Regalbediengerätes werden weitere Stückgüter in die Lagerkanäle eingelagert und hierbei die zuvor in dem Lagerkanal abgestellten Stückgüter innerhalb des Lagerkanals von dem Regalbediengerät in Richtung der Ausgangsseite des Lagerkanals verschoben. Die Stückgüter werden mittels eines teleskopartigen Ein- und Auslagerungselement des ersten Regalbediengerätes in den Lagerkanal hineinbewegt und durch eine Senkbewegung abgestellt. Das Ein- und Auslagerungselement des ersten Regalbediengerätes weist einen an einem Hubtisch des Regalbediengerätes angebrachten Grundrahmen, einen dazu beweglichen Zwischenträger und einen zum Zwischenträger gleichfalls beweglich angeordneten Endträger auf. An dem Endträger sind jeweils in Ein- und Ausfahrrichtung gesehen vorne und hinten Mitnehmer angeordnet, die ausgehend von der auf dem Endträger gebildeten Abstellfläche für eine Gruppe von Getränkekisten sich nach oben erstrecken und somit der in Ein- und Ausfahrrichtung gesehen vordere Mitnehmer die Gruppe von Getränkekisten hintergreifen kann. Über das zweite Regalbediengerät werden die Aufträge des Kunden kommissioniert. Als erster Schritt wird mittels der Ein- und Auslagerungselemente eine Lücke hinter den auszulagernden vollen Getränkekisten geschaffen. Dies erfolgt durch Anheben, kurzes, der Länge der Lücke entsprechendes Ausfahren und Absenken der auszulagernden vollen Getränkekiste sowie erneutes Einfahren und Anheben der auszulagernden Getränkekisten, wobei dann der Mitnehmer in die geschaffene Lücke greift, also die letzte volle Getränkekiste hintergreift. Für das Schaffen der Lücke mittels der Ein- und Auslagerungselemente ist der Mitnehmer federnd absenkbar und vorzugsweise einseitig an dem Endelement befestigt.

Aus der DE 30 20 791 A1 ist ein Regalbediengerät zum Ein- und Auslagern von Stückgut bekannt. Dieses Regalbediengerät weist ein Fahrwerk, eine damit verbundene Tragevorrichtung, eine an der Tragevorrichtung befestigte, in Vertikalrichtung verfahrbare Hubvorrichtung und zumindest ein auf der Hubvorrichtung angeordnetes, in Horizontalrichtung und quer zur Fahrtrichtung verfahrbares Teleskopelement auf Das Teleskopelement weist einen fest mit der Hubvorrichtung verbundenen Grundrahmen und einen relativ zum Grundrahmen verfahrbaren Endträger auf. An gegenüberliegenden Enden des Endträgers ist jeweils mindestens ein Mitnehmer angeordnet. Die Mitnehmer werden durch die Gewichtskraft eines auf dem Endträger angeordneten Stückguts in eine angehobene Position bewegt. Anderenfalls befinden sie sich in einer abgesenkten Position.

Der WO 2005/061363 A2 ist ein ähnlicher Offenbarungsgehalt zu entnehmen.

Aus der US 5,927,926 A ist ebenfalls ein Regalbediengerät zum Ein- und Auslagern von Stückgut bekannt. Dieses Regalbediengerät weist ein Fahrwerk und ein auf dem Fahrwerk angeordnetes, in Horizontalrichtung und quer zur Fahrtrichtung verfahrbares Teleskopelement auf. Das Teleskopelement weist einen fest mit der Hubvorrichtung verbundenen Grundrahmen und einen relativ zum Grundrahmen verfahrbaren Endträger auf. An gegenüberliegenden Enden des Endt-rägers ist jeweils zumindest ein Mitnehmer zum Schieben eines ein- und auszulagernden Stückguts angeordnet. Die Mitnehmer können wahlweise in eine ausgefahrene feststehende erste Position oder in eine eingefahrene abgesenkte zweite Position bewegt werden.

Aus der DE 43 20 402 A1 ist ebenfalls ein Regalbediengerät zum Ein- und Auslagern von Stückgut bekannt. Das Regalbediengerät weist ein Fahrwerk, eine damit verbundene Tragevorrichtung, eine an der Tragevorrichtung befestigt, in Vertikalrichtung verfahrbare Hubvorrichtung und zumindest ein auf der Hubvorrichtung angeordnetes, in Horizontalrichtung und quer zur Fahrtrichtung verfahrbares Teleskopelement auf. Das Teleskopelement weist einen fest mit der Hubvorrichtung verbundenen Grundrahmen und einen relativ zum Grundrahmen verfahrbaren Endträger auf. An gegenüberliegenden Enden des Endträgers ist jeweils zumindest ein Mitnehmer zum Schieben des ein- und auszulagernden Stückguts angeordnet. Das Teleskopelement weist einen oberhalb des Grundrahmens angeordneten Abstellplatz zum Zwischenlagern des Stückguts auf. Die Mitnehmer sind wahlweise in eine ausgefahrene feststehende erste Position oder in eine eingefahrene abgesenkte zweite Position bewegbar.

Aus der GB 1 254 387 ist ein Regalbediengerät zum Ein- und Auslagern von Stückgut bekannt, das ein Fahrwerk, eine damit verbundene Tragevorrichtung, eine an der Tragevorrichtung befestigte, in Vertikalrichtung verfahrbare Hubvorrichtung und ein auf der Hubvorrichtung angeordnetes, in Horizontalrichtung und quer zur Fahrtrichtung verfahrbares Teleskopelement aufweist. Das Teleskopelement weist einen fest mit der Hubvorrichtung verbundenen Grundrahmen und einen relativ zum Grundrahmen verfahrbaren Endträger auf. An gegenüberliegenden Enden des Endträgers ist jeweils ein Mitnehmer zum Schieben des ein- und auszulagernden Stückguts angeordnet. Die Mitnehmer sind wahlweise in eine ausgefahrene feststehende erste Position oder in eine eingefahrene abgesenkte zweite Position bewegbar.

Ausgehend von dem Stand der Stand der Technik gemäß dem deutschen Patent DE 44 06 056 C2 ist es eine Aufgabe der Erfindung, ein verbessertes Regalbediengerät anzugeben.

Es ist eine weitere Aufgabe der Erfindung, ein Lagersystem anzugeben, welches eine geringere Anzahl von Regalbediengeräten benötigt.

Die Aufgabe der Erfindung wird mit einem Regalbediengerät mit den Merkmalen des Anspruchs 1 gelöst. Vorteilhafte Ausgestaltungen des Regalbediengerätes sind in den abhängigen Ansprüchen 2 bis 10 genannt. Im Anspruch 11 ist ein Lagersystem für Stückgut mit zumindest einem derartigen Regalbediengerät angegeben. In den abhängigen Ansprüchen 12 und 13 sind vorteilhafte Ausgestaltungen des Lagersystems genannt.

Erfindungsgemäß sind die jeweiligen Mitnehmer wahlweise in eine ausgefahrene feststehende erste Position oder in eine eingefahrene abgesenkte zweite Position bewegbar. Die sich gegenüberliegenden Mitnehmer weisen einen festen Abstand zueinander auf. Vorzugsweise sind an jedem Ende eines Teleskopelementes zwei Mitnehmer angebracht und zwar jeweils ein Mitnehmer im seitlichen Eckbereich des Teleskopelementes. Die Mitnehmer können beispielsweise haken- oder klappenförmig. ausgebildet sein.

Weiterhin ist erfindungsgemäß an den sich gegenüberliegenden Enden des Grundrahmens zumindest jeweils eine vertikal bewegbare Absturzsicherung angeordnet, die im eingefahrenen Zustand des jeweiligen Endträgers und in einer oberen vertikalen Stellung der Absturzsicherung jeweils dem zumindest einen Mitnehmer gegenüber liegt. Vorzugsweise sind zwei Absturzsicherungen an jedem Ende eines Teleskopelementes angebracht. Insbesondere befindet sich in jedem Eckbereich des Teleskopelementes eine Absturzsicherung.

Besonderes Merkmal der Erfindung ist die individuelle Einstellbarkeit der Mitnehmer. Das Regalbediengerät kann in einer ersten Betriebsart zum Ein- und Auslagern einer vorgegebenen maximalen Anzahl von hintereinander gereihtem Stückgut eingesetzt werden, wobei sich alle Mitnehmer des jeweiligen Teleskopelementes in der ersten Position befinden. In einer zweiten Betriebsart kann das Regalbediengerät zum Kommissionieren und Bereitstellen des Stückguts eingesetzt werden, wobei sich jeweils nur der zumindest eine Mitnehmer des jeweiligen Teleskopelementes in der ersten Position befindet, während sich der zumindest eine jeweils gegenüberliegende Mitnehmer in der zweiten Position befindet.

Damit ist der Vorteil verbunden, dass das erfindungsgemäße Regalbediengerät sowohl zum Ein- und Auslagern von Stückgut in bzw. aus den Lagerkanälen und aus der Bereitstellungs-Rollenbahn sowie zum Kommissionieren und Bereitstellen des Stückguts eingesetzt werden kann. Dadurch kann vorteilhaft die Anzahl von Regalbediengeräten reduziert werden. Im einfachsten Fall ist nur ein Regalbediengerät erforderlich. Im Vergleich zum Stand der Technik gemäß der DE 44 06 056 C2 sind dort drei Regalbediengeräte mit jeweils unterschiedlich ausgeführten Teleskopelementen für die zuvor genannten Betriebsarten erforderlich.

Die Absturzsicherung ermöglicht vorteilhaft eine Sicherung des auf dem Abstellplatz des Regalbediengerätes abgestellten Stückguts. Ein Herunterfallen von Getränkekisten wäre z.B. möglich, wenn zwischen einer abgestellten Getränkekiste und dem Endträger eine Getränkeflasche eingeklemmt ist, so dass, wenn der Endträger zum Kommissionieren ausfährt, die Getränkekisten mitgerissen werden würden. Die Absturzsicherung dient in diesem Fall als Anschlag für das mitgerissene Stückgut.

Einer Ausführungsform zufolge sind die jeweiligen Absturzsicherungen jeweils mittels eines im Bereich des jeweiligen Endes des Grundrahmens angeordneten ersten Stellgliedes betätigbar. Das erste Stellglied kann z.B. elektromechanisch, pneumatisch oder hydraulisch angetrieben sein. Es kann über ein Steuergerät des Regalbediengerätes entsprechend der gewünschten Betriebsart angesteuert werden.

Nach einer weiteren Ausführungsform sind die jeweiligen Mitnehmer jeweils mittels eines im Bereich des jeweiligen Endes des Endträgers angeordneten zweiten Stellgliedes betätigbar. Das zweite Stellglied kann, wie im vorgenannten Fall, elektromechanisch, pneumatisch oder hydraulisch angetrieben sein.

In einer alternativen Ausführungsform sind die jeweiligen Mitnehmer als Haken ausgebildet, welche an dem jeweiligen Ende des Endträgers schwenkbar gelagert sind. Jeweils zumindest ein Drehriegel ist an dem jeweiligen Ende des jeweiligen Endträgers und benachbart zum jeweiligen Haken drehbar gelagert angeordnet. Der jeweilige Drehriegel weist ein Verriegelungsende zum Verriegeln des jeweiligen benachbarten Hakens in der ersten Position und ein dem Verriegelungsende gegenüberliegendes Entriegelungsende zum Entriegeln des jeweiligen benachbarten Hakens aus der ersten Position in die zweite Position auf.

Dadurch kann im Vergleich zur vorherigen Ausführungsform auf ein Stellglied zum Ein- und Ausfahren des jeweiligen Mitnehmers verzichten werden. Die jeweiligen Mitnehmer können dadurch platzsparender im Endbereich des jeweiligen Endes des Teleskopelementes angebracht werden.

Vorzugsweise weist der Endträger einen U-förmigen Querschnitt auf, wobei die Schenkel nach unten weisen. Die Mitnehmer werden im rechten und linken Schenkel eingebaut, d.h., in einem Endbereich des Teleskopelementes bzw. des Endträgers mit einem äußerst knapp bemessenen Platzangebot. Der Schenkelquerschnitt des U-Profils kann beispielsweise 70 mm x 13 mm betragen.

Vorzugsweise weist der jeweilige Haken ein Schwenkteil und ein im Wesentlichen dazu orthogonal angeordnetes Hakenendstück auf. Das Schwenkteil ist in einem Schwenkpunkt am Ende des jeweiligen Endträgers drehbar gelagert. Das Schwenkteil weist eine Ausnehmung zum Einrasten des Verriegelungsendes des jeweiligen benachbarten Drehriegels in der ersten Position auf. Dadurch ist ein in mechanischer Hinsicht denkbar einfacher und dennoch sicherer und zuverlässiger Ver- und Entriegelungsmechanismus realisierbar.

Nach einer bevorzugten Ausführungsform weist die jeweilige Absturzsicherung zumindest einen Anschlag auf. Das jeweilige Ende des jeweiligen Endträgers ist mittels des Drehriegels in Abhängigkeit von der eingestellten Höhe der jeweiligen Absturzsicherung zum Verriegeln oder zum Entriegeln des jeweiligen Hakens gegen den Anschlag verfahrbar. Durch die Verwendung der Absturzsicherung zum Ver- und Entriegeln der jeweiligen Haken vereinfacht sich der Ver- und Entriegelungsmechanismus nochmals.

Nach einer weiteren Ausführungsform weist die jeweilige Absturzsicherung jeweils einen unteren und oberen als Anschlag dienenden Schenkel auf. Der obere Schenkel ist zugleich als Niederholer ausgebildet, so dass der jeweilige Haken nach unvollständiger Entriegelung durch den Drehriegel zwangsweise über eine Vertikalbewegung der jeweiligen Absturzsicherung nach unten in die zweite Position bewegbar ist.

Dieser Fall tritt selten auf, da der Haken bzw. der Mitnehmer aufgrund der Schwerkraft normalerweise von sich aus in die entriegelte zweite Position fällt. Aufgrund von Verschmutzungen, wie z.B. durch losgelöste Flaschenetiketten, ist eine Verklemmung eines Hakens in der ausgefahrenen ersten Position dennoch möglich. Das aktiv erzwungene Niederholen des Hakens in die abgesenkte zweite Position erhöht die Zuverlässigkeit des gesamten Regalbediengerätes.

Die Absturzsicherung weist vorzugsweise ein U-förmiges Profil auf, wobei die beiden Schenkel im eingefahrenen Zustand zum jeweiligen Ende des Endträgers zeigen. Die beiden Schenkel sind typischerweise parallel zueinander angeordnet.

Nach einer bevorzugten Ausführungsform weist das Regalbediengerät ein erstes Teleskopelement mit einer ersten Breite und ein zweites Teleskopelement mit einer zweiten Breite auf, die von der ersten Breite verschieden ist. Dadurch sind ein vorteilhaft ein Ein- und Auslagern sowie ein Kommissionieren und ein Bereitstellen von Stückgut mit einer dazu korrespondierenden ersten und zweiten Stückgutbreite möglich. Die Getränkekisten weisen üblicherweise eine standardisierte Getränkekistenbreite auf. Der größte Teil der im Umlauf befindlichen Getränkekisten weist sogar nur zwei standardisierte Getränkekistenbreiten auf. Das erfindungsgemäße Regalbediengerät ist somit in der Lage, nahezu alle verfügbaren Getränkekisten zu bedienen.

Nach einer Ausführungsform weist das Regalbediengerät ein Steuergerät mit ersten Mitteln zum Einstellen eines horizontalen Verfahrweges des jeweiligen Teleskopelementes und zum Einstellen eines vertikalen Verfahrweges der jeweiligen Absturzsicherungen derart auf, dass jeder Mitnehmer des jeweiligen Teleskopelementes individuell in die erste oder zweite Position bewegbar ist. Dadurch ist eine zuverlässige Einstellbarkeit der jeweiligen Mitnehmer in die erste oder zweite Position möglich. Die Verfahrmechaniken des Teleskopelementes sowie der Absturzsicherungen dienen in vorteilhafter Weise als Stellglieder. Durch die auf ein Minimum reduzierte Anzahl von Stellgliedern erhöht sich die Zuverlässigkeit des erfindungsgemäßen Regalbediengerätes.

Darüber hinaus weist das Regalbediengerät ein Steuergerät mit zweiten Mitteln zum Einstellen der Höhe der Hubvorrichtung für das Ein- und Auslagern sowie für das Kommissionieren und Bereitstellen des Stückguts sowie dritte Mittel zum Einstellen eines horizontalen Verfahrweges des Regalbediengerätes entlang einer zugehörigen Fahrbahn auf.

Die Aufgabe der Erfindung wird weiterhin durch ein Lagersystem für Stückgut mit einem als Durchgangslager ausgebildeten und eine Vielzahl von Lagerkanälen aufweisenden Lagerbereich für das Stückgut gelöst. Das erfindungsgemäße Lagersystem weist einen Anlieferungs- und Abholungsbereich, insbesondere für Paletten mit Getränkekisten, und zumindest einen kundenseitigen Aus- und Rückgabebereich für das Stückgut auf. Das Lagersystem weist gemäß der Erfindung zumindest ein Regalbediengerät zum Ein- und Auslagern des Stückguts in bzw. aus den Lagerkanälen und zum Kommissionieren und Bereitstellen des Stückguts an dem jeweiligen Aus- und Rückgabebereich auf.

Ein derartiges Lagersystem kann aufgrund der geringeren benötigten Anzahl von Regalbediengeräten wirtschaftlicher realisiert und betrieben werden. Da weniger Regalbediengeräte erforderlich sind, ist die Gesamtausfallwahrscheinlichkeit der Regalbediengeräte und somit des gesamten Lagersystems geringer.

In einer besonderen Ausführungsform weist das Lagersystem zumindest einen ersten Gang auf, von dem aus das Einlagern des Stückguts in die Lagerkanäle erfolgt. Das Lagersystem weist zumindest einen zweiten Gang auf, von dem aus das Auslagern des eingelagerten Stückguts bzw. das Kommissionieren erfolgt. Das Lagersystem weist zumindest einen Durchgangsbereich auf, um für das zumindest eine Regalbediengerät einen Wechsel von einem der ersten zu einem der zweiten Gänge und umgekehrt zu ermöglichen.

Dadurch kann das Regalbediengerät schnell von der Betriebsart Auslagern aus der Bereitstellungs-Rollenbahn sowie Einlagern des Stückguts in die Lagerkanäle zur Betriebsart Kommissionieren und Bereitstellen des Stückguts an den Kunden wechseln. Somit kann der Ein- und Auslagerungsbereich des Durchgangslagers schnell und wirtschaftlich von nur einem Regalbediengerät bedient werden.

Das Lagersystem ist vorzugsweise ein Getränkemarkt. Bei dem Stückgut handelt es sich um Getränkekisten. Alternativ kann es sich bei dem Stückgut um Pakete, Baustoffe, Eisenwaren oder dergleichen handeln, die eine oder mehrere standardisierte Breiten zum möglichen Ein- und Auslagern in die Lagerkanäle aufweisen.

Die Erfindung sowie vorteilhafte Ausführungen der Erfindung werden im Weiteren anhand der nachfolgenden Figuren näher beschrieben. Es zeigen
- FIG 1: eine schematische Ansicht eines erfindungsgemäßen Lagersystems,
- FIG 2: beispielhaft ein erfindungsgemäßes Regalbediengerät mit einem Teleskopelement,
- FIG 3: einen Querschnitt durch einen Endträger des Tele- skopelementes des Regalbediengerätes gemäß FIG 2 im Bereich eines Mitnehmers,
- FIG 4: beispielhaft einen mittels eines zweiten Stellglie- des betätigbaren Mitnehmer gemäß der Erfindung,
- FIG 5: das Regalbediengerät gemäß FIG 2 mit ausgefahrenem Endträger zum Auslagern von Getränkekisten als Stückgut von einer Bereitstellungs-Rollenbahn,
- FIG 6,: das Regalbediengerät beim Aufschieben der Getränke-
- FIG 7: kisten auf einen Abstellplatz des Regalbediengerä- tes sowie mit vollständig aufgeschobenen Getränkis- ten,
- FIG 8 - FIG 12: das Regalbediengerät beim Kommissionieren einer Getränkekiste, mit zwei kommissionierten Getränke- kisten auf dem Abstellplatz sowie beim Bereitstel- len der Getränkekisten an einen Kundenausgabereich,
- FIG 13: das Regalbediengerät beim Einsammeln von Leergut und
- FIG 14 - FIG 19: einen an einem Ende des Teleskopelementes des Regalbediengerätes angeordneten Mitnehmer beim Verriegeln durch eine verfahrbare Absturzsicherung, im verriegelten Zustand, beim Entriegeln und im entriegelten Zustand gemäß der Erfindung.

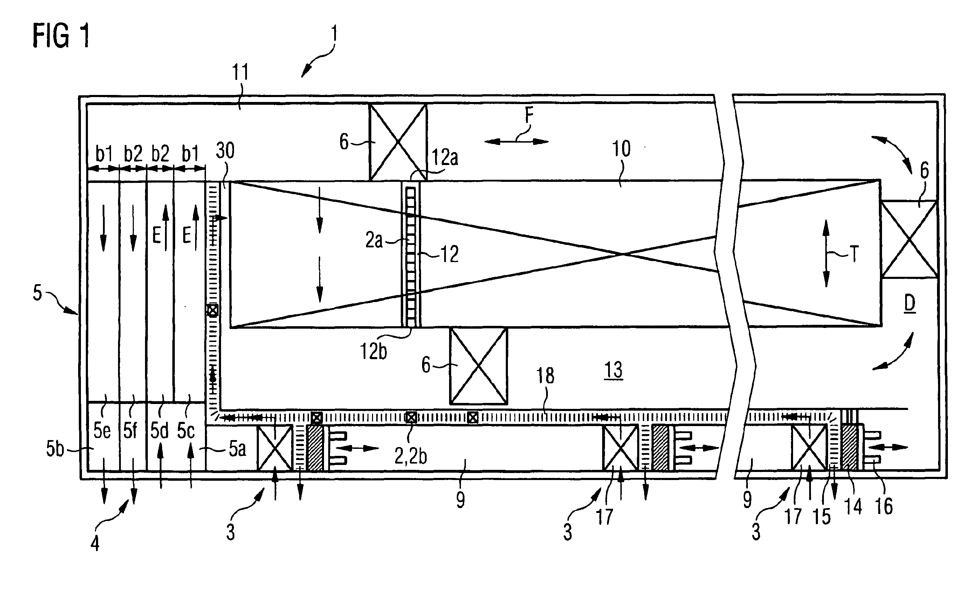

FIG 1 zeigt eine schematische Ansicht eines erfindungsgemäßen Lagersystems 1. Bei dem gezeigten beispielhaften Lagersystem 1 handelt es sich um einen Getränkemarkt.

Das Lagersystem 1 weist im Wesentlichen einen Anlieferungs- und Abholungsbereich 4, einen Bereitstellungsbereich 5, ein oder mehrere erfindungsgemäße Regalbediengeräte 6, einen Lagerbereich 10, einen Zwischenspeicherbereich 9, einen kundenseitigen Aus- und Rückgabebereich 3 sowie einen Leergutförderer 18 auf.

Im Zentrum des Lagersystems 1 befindet sich der als Durchgangslager ausgebildete Lagerbereich 10 mit einer sogenannten FIFO-Struktur (First In First Out). Er weist eine Vielzahl von nebeneinander und übereinander geordneten Lagerkanälen 12 auf, die mit Stückgut 2 in Form von vollen Getränkekisten 2a, das heißt mit Getränkekisten 2a mit gefüllten Getränkeflaschen, bestückt sind. Die Lagerkanäle 12 weisen beispielhaft eine Stapeltiefe T von 15 Getränkekisten 2a auf. Mit dem Bezugszeichen 12a ist eine Eingangsseite der Lagerkanäle 12 und mit dem Bezugszeichen 12b eine Ausgangsseite bezeichnet. Die Bestückung der Lagerkanäle 12 erfolgt folglich von der Eingangseite 12a, während die Entnahme bzw. die Auslagerung der Getränkekisten 2a von der Ausgangsseite 12b her erfolgt.

In dem Anlieferungs- und Abholungsbereich 4 werden die auf Paletten gestapelten vollen Getränkekisten 2a in üblicherweise von Lastkraftwagen angeliefert und die ebenfalls auf Paletten gestapelten leeren Getränkekisten 2b abgeholt. Die angelieferten Getränkekisten 2a werden einem angrenzenden Bereitstellungsbereich 5 übergeben bzw. es werden die leeren Getränkekisten 2b dort abgezogen. Der Bereitstellungsbereich 5 weist einen Vereinzelungsbereich 5a mit beispielhaft zwei Bereitstellungs-Rollenbahnen 5c, 5d mit einer jeweils unterschiedlichen, an die beiden häufigsten Getränkekistentypen angepasste Breite b1 b2 auf. Dort werden die vollen Getränkekisten 2a von den Paletten entstapelt und einer der beiden Bereitstellungs-Rollenbahnen 5c, 5d entsprechend ihrer Breite b1, b2 zugeführt. Anstelle von Rollenbahnen können auch Stetigförderer oder Bahnen mit jeweils zwei zueinander parallel angeordneten Winkelprofilen eingesetzt werden. Im letzteren Fall weist der jeweils außenliegende Schenkel zur seitlichen Führung der Getränkekisten senkrecht nach oben. Je nach Ausgestaltung des Regalbediengerätes 6, welches den beiden Bereitstellungsbahnen 5c, 5d logistisch nachgeordnet ist, kann das erfindungsgemäße Regalbediengerät 6 eine Gruppe 2c von Getränkekisten 2a mit einer maximal vorgegebene Anzahl von der jeweiligen Bereitstellungsbahn 5c, 5d entnehmen.

Das Regalbediengerät 6 ist in einem ersten Gang 11 horizontal und rechtwinklig zur Einlagerungsrichtung E der Rollenbahnen 5c, 5d in Fahrrichtung F verfahrbar. Es weist zum Ein- und Auslagern des Stückguts 2 bzw. der Getränkekisten 2a ein Fahrwerk, eine damit verbundene Tragevorrichtung und eine an der Tragevorrichtung befestigte, in Vertikalrichtung verfahrbare Hubvorrichtung auf. Im Beispiel der FIG 1 sind zwei auf der Hubvorrichtung angeordnete, in Horizontalrichtung und quer zur Fahrtrichtung F verfahrbare Teleskopelemente angebracht, um unter anderem Getränkekisten 2a mit beiden Breiten b1, b2 bedienen zu können. Das Regalbediengerät 6 entnimmt mittels eines der beiden Teleskopelemente eine Gruppe 2c von vollen Getränkekisten 2a von einem der beiden Bereitstellungs-Rollenbahnen 5c, 5d und verfährt entlang des ersten Ganges 11 zu dem Lagerbereich 10. Das Regalbediengerät 6 übergibt wiederum mittels seines Teleskopelementes die Gruppe 2c von vollen Getränkekisten 2a an einen Lagerkanal 12 des Lagerbereichs 10. In jedem Lagerkanal 12 sind volle Getränkekisten 2a nur einer Getränkesorte gelagert.

An der Ausgangsseite 12b der Lagerkanäle 12 schließt sich ein zweiter Gang 13 für das oder für ein weiteres Regalbediengerät 6 an, dessen Fahrtrichtung F parallel zur Fahrtrichtung F im ersten Gang 11 verläuft. Das Regalbediengerät 6 im zweiten Gang 13 kommissioniert die Aufträge der Kunden. Hierzu fährt das Regalbediengerät 6 in Fahrtrichtung F entlang der Ausgangsseite 12b der Lagerkanäle 12 und entnimmt die vollen Getränkekisten 2a in der gewünschten Anzahl und Sorte. Wenn der Kommissionierungsvorgang abgeschlossen ist und die kommissionierten vollen Getränkekisten 2a auf einem Abstellplatz oberhalb des Teleskopelementes zwischengelagert sind, verfährt das Regalbediengerät 6 zu einem der Aus- und Rückgabebereiche 3, die entlang des zweiten Ganges 13 auf der dem Lagerbereich 10 gegenüberliegenden Seite angeordnet sind. Das Regalbediengerät 6 übergibt nun die kommissionierten Getränkekisten 2a an eine absenkbare Hubplattform 14, die Bestandteil des Aus- und Rückgabebereichs 3 ist. Mittels eines Schiebers 16 werden die vollen Getränkekisten 2a seitlich auf einen Ausgabeförderer 15 geschoben, der beispielsweise als Rollenbahn mit leichtem Gefälle ausgebildet sein kann. Ein Kunde kann am Ende des Ausgabeförderers 15 die gewünschten vollen Getränkekisten 2a entnehmen.

Neben dem Ausgabeförderer 15 weist der Aus- und Rückgabebereich 3 zusätzlich noch einen Rückgabeautomat 17 auf, an dem der Kunde leere Getränkekisten 2b abgeben kann, die dann an einen angrenzenden Leergutförderer 18 übergeben werden. Der Leergutförderer 18 ist beispielsweise als angetriebene Rollenbahn ausgebildet und verläuft entlang des gesamten zweiten Ganges 13 auf der dem Lagerbereich 10 gegenüberliegenden Seite sowie auf dem Niveau der abgesenkten Hubplattform 14. Weiterhin verbindet der Leergutförderer 18 die Aus- und Rückgabebereiche 3 mit dem ersten Gang 11, das heißt er verläuft zwischen dem Lagerbereich 10 und dem Bereitstellungsbereich 5 hindurch und grenzt dann an den ersten Gang 11 an. Die leeren Getränkekisten 2b werden von dem Regalbediengerät 6 zum Auslagern aufgenommen und an eine erste Abzugsbahn 5e mit einer ersten Breite b1 oder an eine zweite Abzugsbahn 5f mit einer zweiten Breite b2 zugeführt. Die jeweilige Abzugsbahn 5e, 5f kann ein Stetigförderer, eine Rollenbahn oder eine Bahn mit jeweils zwei zueinander parallel angeordneten Winkelprofilen sein. Am Ende der Abzugsbahnen 5e, 5f folgt ein Palettierungsbereich 5b, in dem die einzelnen leeren Getränkekisten 2b auf Paletten gestapelt werden und anschließend an den Anlieferungs- und Abholungsbereich 4 übergeben werden, wo eine Abholung durch Lastkraftwagen erfolgt.

Erfindungsgemäß weist das Lagersystem 1 einen Durchgangsbereich D auf, um dem beispielhaft einzigen Regalbediengerät 6 ein Wechseln vom ersten zum Gang 11 zum zweiten Gang 13 und umgekehrt zu ermöglichen. Das Lagersystem 1 kann alternativ zwei oder mehrere Durchgangsbereiche D aufweisen.

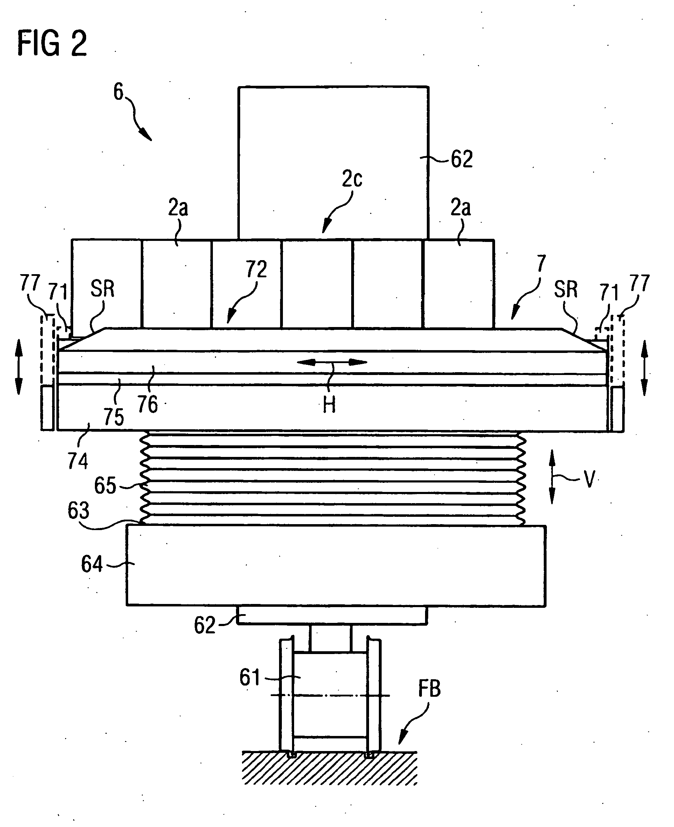

FIG 2 zeigt beispielhaft ein erfindungsgemäßes Regalbediengerät 6 mit einem Teleskopelement 7. Es kann alternativ zwei oder mehr Teleskopelemente 7 aufweisen, um Getränkekisten unterschiedlicher Breiten b1 b2 zu handhaben. Das Teleskopelement 7 kann vorzugsweise in beiden seitlichen Richtungen ausgefahren werden, das heißt entsprechend der Darstellung gemäß FIG 2 nach links und rechts. Im Falle von zwei oder mehr Teleskopelementen 7 können diese gemeinsam oder separat angetrieben sein.

Das erfindungsgemäße Regalbediengerät 6 weist das Fahrwerk 61, die damit verbundene Tragevorrichtung 61, die an der Tragevorrichtung 62 befestigte, in Vertikalrichtung V verfahrbare Hubvorrichtung 63 auf. Bei dem Fahrwerk 61 handelt es sich um ein spurgebundenes, insbesondere um ein schienengebundenes, Fahrwerk 61. Mit dem Bezugszeichen FB ist die korrespondierende Fahrbahn bezeichnet. Alternativ kann das Regalbediengerät 6 ein nicht spurgebundenes Fahrzeug sein, welches mittels Räder, Rollen oder eines Raupenantriebs bewegt wird. Das Regalbediengerät 6 weist weiterhin das auf der Hubvorrichtung 63 angeordnete, in Horizontalrichtung H und quer zur Fahrtrichtung F verfahrbare Teleskopelement 7 auf. Das Teleskopelement 7 weist den fest mit der Hubvorrichtung 63 verbundenen Grundrahmen 74 und den relativ zum Grundrahmen 74 verfahrbaren Endträger 76 auf. Das Regalbediengerät 6 weist vorzugsweise ein Steuergerät mit zweiten Mitteln zum Einstellen der Höhe der Hubvorrichtung 63 für das Ein- und Auslagern sowie für das Kommissionieren und Bereitstellen des Stückguts 2 sowie dritte Mittel zum Einstellen eines horizontalen Verfahrweges des Regalbediengerätes 6 entlang der zugehörigen Fahrbahn FB auf.

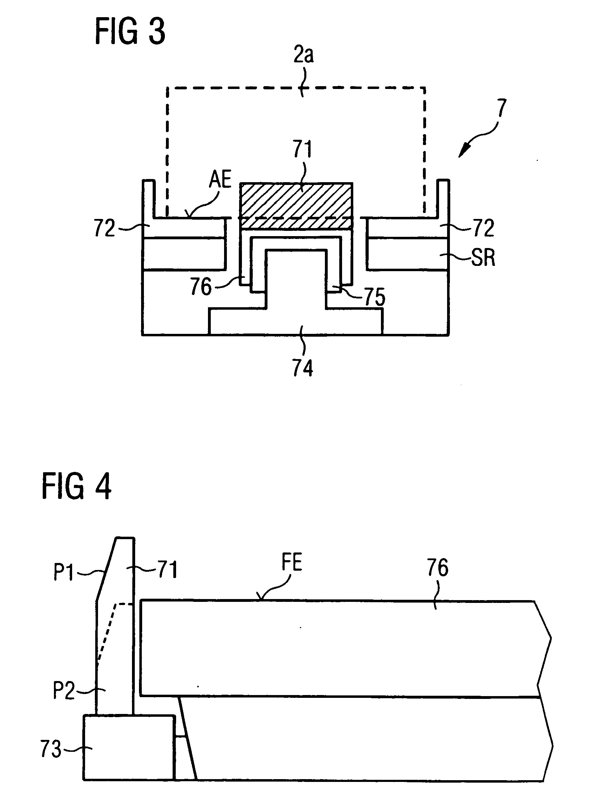

Im Beispiel der FIG 2 ist zwischen dem Grundrahmen 74 und dem Endträger 76 ein beweglich geführter Zwischenträger 75 vorhanden. Dadurch kann das jeweilige Teleskopelement 7 im Sinne eines Teleskops noch weiter ausgefahren werden. Das Teleskopelement 7 kann beispielsweise als elektromotorischer Linearantrieb ausgebildet sein. Es kann alternativ über einen Ketten- oder Spindelantrieb verfügen. An den gegenüberliegenden Enden des Endträgers 76 sind je zwei Mitnehmer 71 zum Schieben des ein- und auszulagernden Stückguts 2 angeordnet. Sie befinden sich vorzugsweise im Eckbereich am jeweiligen Ende des Teleskopelementes 7. Alternativ kann sich der Mitnehmer, wie die nachfolgende FIG 3 zeigt, über die gesamte Breite des Teleskopelementes 7 erstrecken. Zudem weist das Teleskopelement 7 einen oberhalb des Grundrahmens 74 angeordneten Abstellplatz 72 zum Zwischenlagern des Stückguts 2 auf. Der Abstellplatz 72 ist vorzugsweise aus Winkelprofilen gebildet. Im Beispiel der FIG 2 sind dort sechs Getränkekisten 2a hintereinander gereiht zwischengelagert angeordnet.

Erfindungsgemäß sind die jeweiligen Mitnehmer 71 wahlweise in eine ausgefahrene feststehende erste Position P1 oder in eine eingefahrene abgesenkte zweite Position P2 bewegbar. Mit "feststehend" ist gemeint, dass die Mitnehmer 71 nicht federnd absenkbar sind.

Die erste Position P1, welche die Mitnehmer 71 einnehmen können, ist gestrichelt dargestellt. Deutlich zu sehen ist, wie der linke Mitnehmer 71 in der oberen Position P1 die Gruppe 2c von Getränkekisten 2a von links her hintergreift. In dieser ersten Betriebsart "Ein- und Auslagern" befinden sich alle Mitnehmer 71 des Teleskopelementes 7 zum Ein- und Auslagern einer vorgegebenen maximalen Anzahl von hintereinander gereihtem Stückgut in der ersten, das heißt ausgefahrenen Position P1. Dies erlaubt es dem Regalbediengerät 6, eine Gruppe 2c von Getränkekisten 2a gabelförmig aus einer der Bereitstellungsbahnen 5c, 5d herauszunehmen und diese in einen ausgewählten Lagerkanal 12 einzuschieben. Die Gruppe 2c der Getränkekisten 2a ist seitlich durch die angrenzenden Mitnehmer 71 eingefasst und gesichert. In gleicher Weise kann eine Gruppe 2c von leeren Getränkekisten 2b dem Ende des Leergutförderers 18 entnommen und einer der Auszugsbahnen 5e, 5f übergeben werden.

In einer zweiten Betriebsart "Kommissionieren und Bereitstellen" befindet sich die zwei Mitnehmer 71 eines Endes des Teleskopelementes 7 in der ersten Position P1, während sich die zwei gegenüberliegenden Mitnehmer 71, das heißt an dem gegenüberliegenden Ende des Teleskopelement 7, in der zweiten Position P2 befinden und somit abgesenkt sind. Dadurch können wahlweise ein, zwei oder mehr Getränkekisten 2a aus einem Lagerkanal 12 herausgezogen werden und diese nacheinander auf den Abstellplatz 72 des Regalbediengerätes 6 aufgeschoben werden. Durch die versenkten Mitnehmer 71 werden die aufgeschobenen Getränkekisten 2a nicht wieder auf den Endträger 76 zurückgeschoben, sondern verbleiben auf dem Abstellplatz 72.

Weiterhin sind an den sich gegenüberliegenden Enden des Grundrahmens 74 erfindungsgemäß zwei vertikal bewegbare Absturzsicherungen 77 angeordnet, welche im eingefahrenen Zustand des jeweiligen Endträgers 76 und in einer oberen vertikalen Stellung der jeweiligen Absturzsicherung 77 jeweils dem zumindest einen Mitnehmer 71 gegenüberliegen. Die Absturzsicherungen 77 sind jeweils mittels eines im Bereich des jeweiligen Endes des Grundrahmens 74 angeordneten ersten Stellgliedes 78 betätigbar. Werden beim Kommissionieren nacheinander ausgewählte Getränkekisten 2a auf den Abstellplatz 72 geschoben, so dient die am Ende des Grundrahmens 74 in Aufschiebrichtung in die obere Stellung ausgefahrene Absturzsicherung 77 als Anschlag für die aufzuschiebenden Getränkekisten 2a.

Zum Kommissionieren fährt der Endträger 76 mit den zwei an diesem Ende ausgefahrenen Mitnehmern 71 unter einem ausgewählten Lagerkanal 12 hindurch und hebt die am weitesten innenliegende gewünschte Getränkekiste 2a mit den Mitnehmern 71 an. Die Gruppe 2c der Getränkekisten 2a wird zur Schaffung einer Lücke geringfügig eingefahren. Nach Absenkung des Endträgers 76 fährt dieser wieder in etwa um die Tiefe der Lücke aus, so dass nun der Mitnehmer 71 die Gruppe 2c der Getränkekisten 2a hintergreifen kann. Im Anschluss erfolgt mit dem Einfahren des Endträgers 76 das Aufschieben der Getränkekisten 2a über eine Schräge SR auf den Abstellplatz 72.

FIG 3 zeigt einen Querschnitt durch einen Endträger 76 des Teleskopelementes 7 des Regalbediengerätes 6 gemäß FIG 2 im Bereich eines Mitnehmers 71. Es ist erkennbar, dass der Abstellplatz 72 zum Abstellen der Getränkekisten 2a im Wesentlichen aus den Winkelprofilen gebildet ist, die mit ihren oberen Schenkeln die Getränkekisten 2a seitlich führen. Mit dem Bezugszeichen AE ist eine Abstellplatzebene für die Getränkekisten 2a bezeichnet, mit FE eine Förderebene des Endträgers 76, welche geringfügig tiefer liegt als die Abstellplatzebene AE. Die Breite des Abstellplatzes 72 entspricht im Wesentlichen der Breite b1, b2 der mit dem Endträger 76 korrespondierenden Lagerkanäle 12, welche vorzugsweise gleichfalls aus Winkelprofilen gebildet sind. Der Endträger 76 kann daher beim Ein- und Auslagern die ausgewählten Getränkekisten 2a zwischen den Winkelprofilen eines Lagerkanals 12 über seine gesamte Einfahrtiefe anheben und aus dem Lagerkanal 12 herausziehen.

FIG 4 zeigt beispielhaft einen mittels eines Stellgliedes 73 betätigbaren Mitnehmer 71 gemäß der Erfindung. Das Stellglied 73 ist im Bereich des Endes des gezeigten Endträgers 76 angeordnet. FIG 4 zeigt den Mitnehmer 71 in der ausgefahrenen ersten Position P1, so dass er in vertikaler Richtung über die Förderebene FE des Endträgers 76 des Teleskopelementes 7 hinausragt. In der gestrichelt dargestellten abgesenkten zweiten Position P2 befindet sich der Mitnehmer 71 unterhalb der Förderebene FE des Endträgers 76.

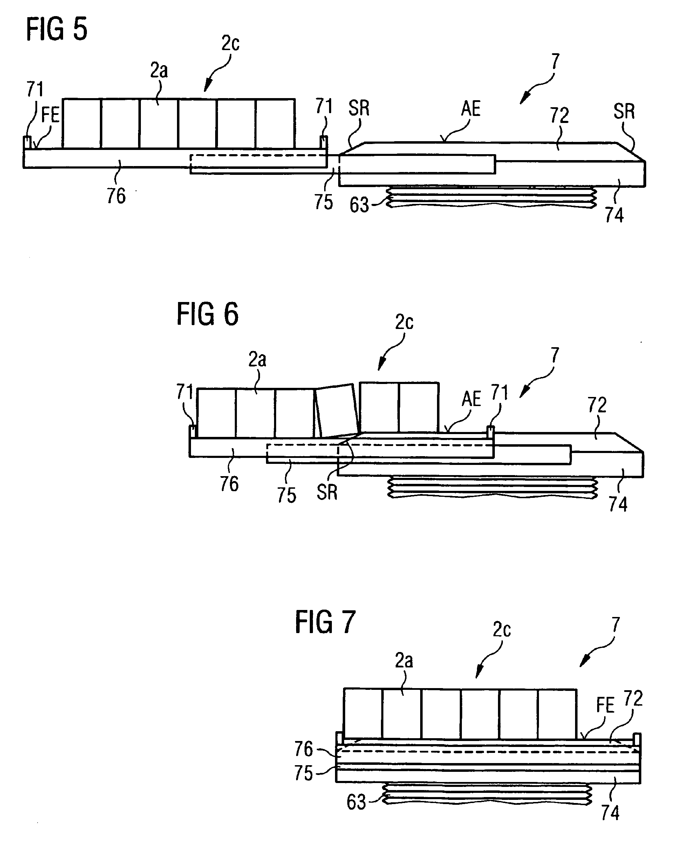

FIG 5 zeigt das Regalbediengerät 6 gemäß FIG 2 mit ausgefahrenem Endträger 76 zum Auslagern von Getränkekisten 2a als Stückgut 2 von einer nicht weiter dargestellten Bereitstellungs-Rollenbahn. Das Teleskopelement 7 weist den an der Hubvorrichtung 63 angebrachten Grundrahmen 74, den darüberliegenden, relativ zum Grundrahmen 74 verfahrbar geführten zwischenträger 75 und den relativ zum Zwischenträger 75 verfahrbar geführten Endträger 76 auf. Wie die FIG 5 zeigt, ermöglicht diese Anordnung im Sinne eines Teleskops ein möglichst weites Ausfahren des Endträgers 76 zum Ein- und Auslagern sowie zum Kommissionieren und Bereitstellen des Stückguts 2. Im Beispiel der FIG 5 sind alle Mitnehmer 71 ausgefahren, so dass eine Gruppe 2c von Getränkekisten 2a eingefasst und aus der Bereitstellungs-Rollenbahn herausgenommen werden kann.

FIG 6 zeigt das Regalbediengerät 6 beim Aufschieben der Getränkekisten 2a auf einen Abstellplatz 72 des Regalbediengerätes 6. Die Getränkekisten 2a werden über die Schräge SR auf den mit Winkelprofilen gebildeten Abstellplatz 72 aufgeschoben.

FIG 7 zeigt das Regalbediengerät 6 mit vollständig aufgeschobenen Getränkekisten 2a.

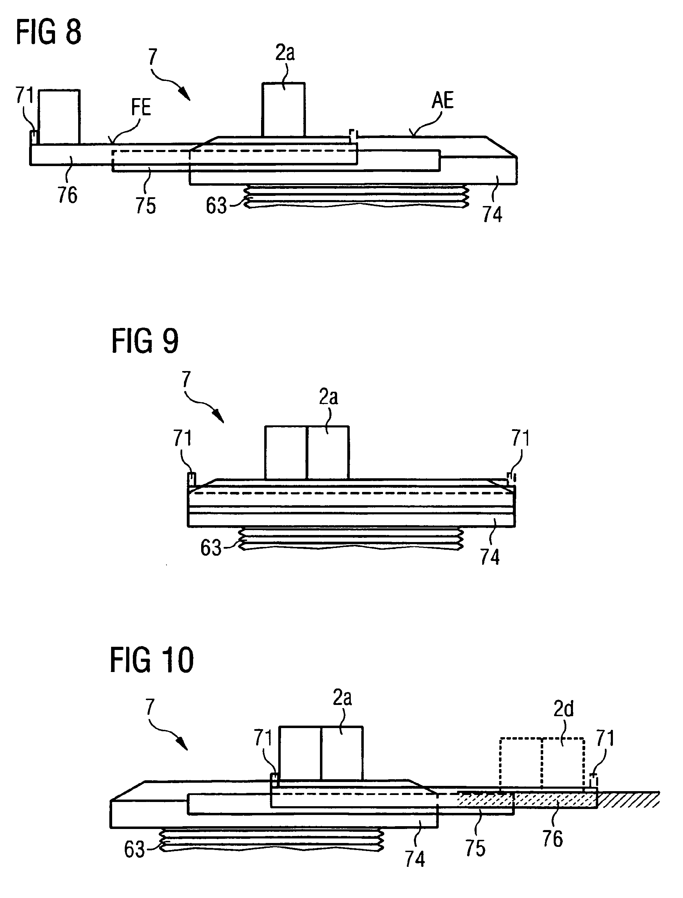

FIG 8 zeigt das Regalbediengerät 6 beim Kommissionieren einer Getränkekiste 2a, nachdem der Endträger 76 mittels der ausgefahrenen feststehenden linken Mitnehmer 71 ein Lücke geschaffen hat. Der Endträger 76 kann somit die gezeigten Getränkekisten 2a hintergreifen und aus einem nicht weiter dargestellten Lagerkanal herausziehen. Die rechten Mitnehmer 71 befinden sich dagegen in der abgesenkten zweiten Position, so dass die bereits auf dem Abstellplatz 72 abgestellte Getränkekisten 2a beim Kommissionieren der nächsten Getränkekisten 2a nicht wieder auf den Endträger 76 nach links zurückgeschoben werden. Vorzugsweise ist dann die Absturzsicherung am rechten Ende des Grundrahmens zur Sicherung der Getränkekisten 2a nach oben ausgefahren. Die Absturzsicherung selbst ist in dieser Darstellung aus Gründen der Übersichtlichkeit nicht gezeigt.

FIG 9 zeigt das Regalbediengerät 6 mit zwei kommissionierten Getränkekisten 2a.

FIG 10 zeigt das Regalbediengerät 6 beim Bereitstellen der zwei kommissionierten Getränkekisten 2a an einen Zwischenspeicherbereich 9 mit bereits zwei dort zwischengelagerten Getränkekisten 2d, wie z.B. aus einem vorherigen Kommissionierungsvorgang.

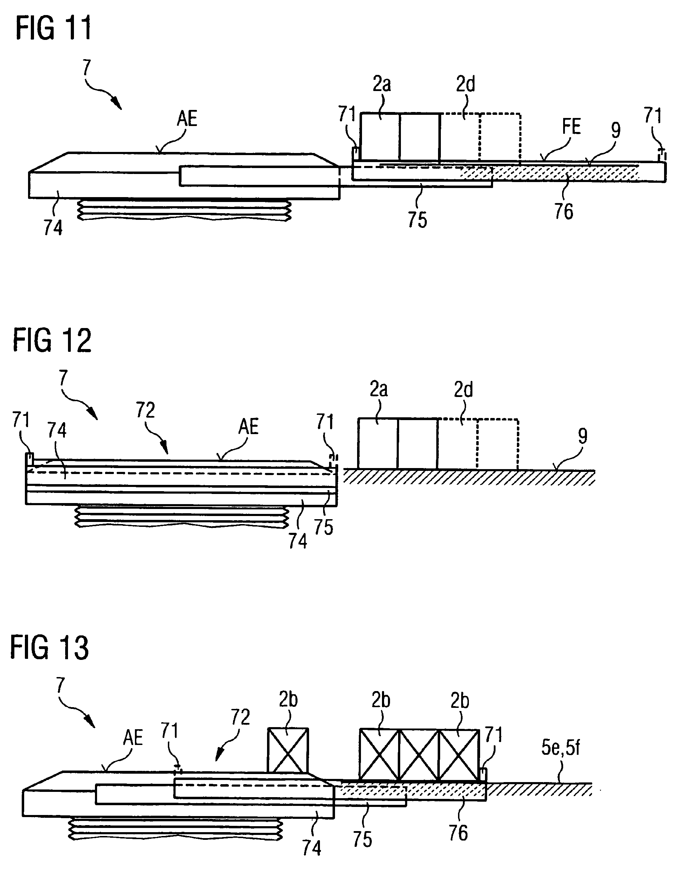

FIG 11 zeigt das Schieben der zwei kommissionierten Getränkekisten 2a in den Zwischenlagerbereich 9 zur Bereitstellung an den Kunden.

In FIG 12 ist der Bereitstellungsvorgang abgeschlossen und der Endträger 76 wieder eingefahren.

FIG 13 zeigt das Regalbediengerät 6 beim Einsammeln von Leergut 2 bzw. von leeren Getränkekisten 2b aus einer Abzugsbahn 5e, 5f. In diesem Fall sind die rechten Mitnehmer 71 ausgefahren, um die leeren Getränkekisten 2b über diese auf den Abstellplatz 72 zu ziehen. Die linken beiden Mitnehmer 71 sind eingefahren, um nicht die bereits aufgeschobenen leeren Getränkekisten 2a wieder auf den Endträger 76 zurückzuschieben.

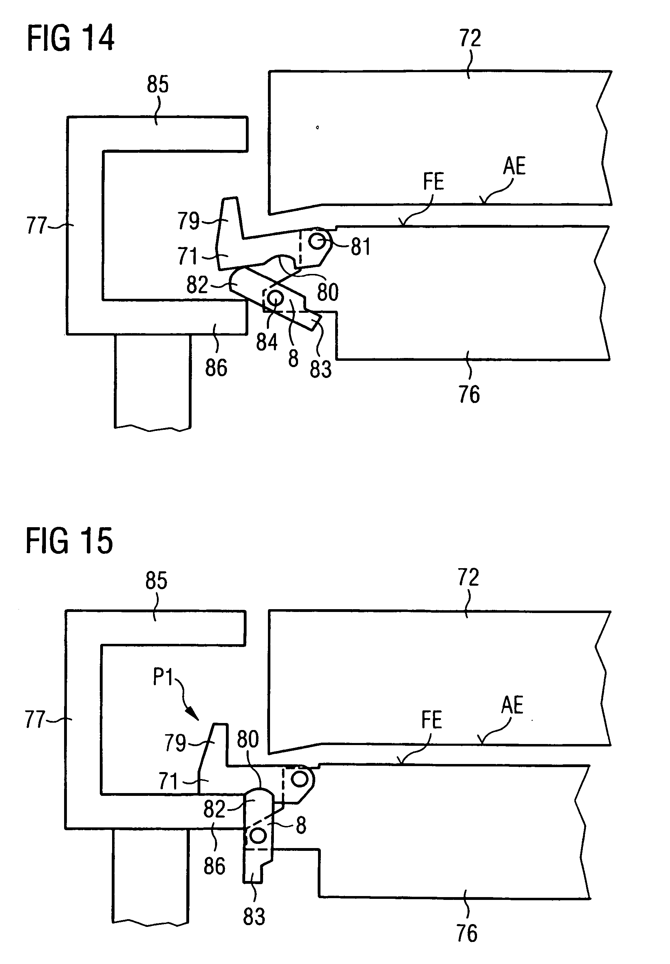

FIG 14 zeigt ein an einem Ende des Teleskopelementes 7 des Regalbediengerätes 6 angeordneten Mitnehmer 71 beim Verriegeln durch eine verfahrbare Absturzsicherung 77. Der zweite, in der Bildebene dahinterliegende Mitnehmer 71 ist in dieser Darstellung nicht zu sehen.

Die Mitnehmer 71 sind vorzugsweise in einem Eckbereich des Endträgers 76 angeordnet. Sie sind vorzugsweise als Haken ausgebildet, welche an dem jeweiligen Ende des Endträgers 76 schwenkbar gelagert sind. Es ist jeweils ein Drehriegel 8 an dem Ende des gezeigten Endträgers 76 benachbart zum jeweiligen Haken 71 drehbar gelagert angeordnet. Der Drehriegel 8 weist ein Verriegelungsende 82 zum Verriegeln des jeweiligen benachbarten Hakens 71 und ein dem Verriegelungsende 82 gegenüberliegendes Entriegelungsende 83 zum Entriegeln des jeweiligen benachbarten Hakens 71 auf. Der gezeigte Haken 71 weist ein Schwenkteil 87 und ein im Wesentlichen dazu orthogonal angeordnetes Hakenendstück 79 auf. Das Schwenkteil 87 ist in einem Schwenkpunkt 81 am Ende des Endträgers 76 drehbar gelagert. Weiterhin weist das Schwenkteil 87 eine Ausnehmung 80 zum Einrasten des Verriegelungsendes 82 des benachbarten Drehriegels 8 auf.

In der FIG 14 ist zudem eine der Absturzsicherungen 77 dargestellt, wobei die zweite, in der Bildebene dahinterliegende Absturzsicherung 77 in dieser Darstellung nicht zu sehen ist. Die Absturzsicherung 77 ist beispielhaft bügelförmig ausgebildet. Sie weist ein U-förmiges Profil auf, wobei die Schenkel 85, 86 im eingefahrenen Zustand des Endträgers 76 in Richtung der dort angeordneten Mitnehmer 71 zeigen. Vorzugsweise sind die Schenkel 85, 86 horizontal angeordnet. Die gezeigten Schenkel 85, 86 bilden beispielhaft jeweils einen Anschlag aus, gegen den das Ende des gezeigten Endträgers 76 mittels des Drehriegels 8 in Abhängigkeit von der eingestellten Höhe der jeweiligen Absturzsicherung 77 zum Verriegeln oder zum Entriegeln des jeweiligen Hakens 71 verfahrbar ist. Wie die FIG 14 weiter zeigt, ist die Absturzsicherung 77 gerade im Begriff, den Haken 71 mittels des Verriegelungsendes 82 des Drehriegels 8 zu verriegeln. Hierzu wird die Absturzsicherung 77 durch das erste Stellglied nach oben bewegt.

FIG 15 zeigt den Mitnehmer 71 im verriegelten Zustand. In diesem Fall ist durch die Weiternachobenbewegung der Absturzsicherung 77 das Verriegelungsende 82 des Drehriegels 8 in einer entsprechend geometrisch auf das Verriegelungsende 82 abgestimmten Ausnehmung 80 im Haken 71 verriegelt. Dabei verbleibt der Haken 71 aufgrund seiner Schwerkraft und aufgrund der verrastend wirkenden Formgebung des Verriegelungsendes 82 und der dazu korrespondierenden Ausnehmung 80 sicher in der verriegelten ersten Position P1.

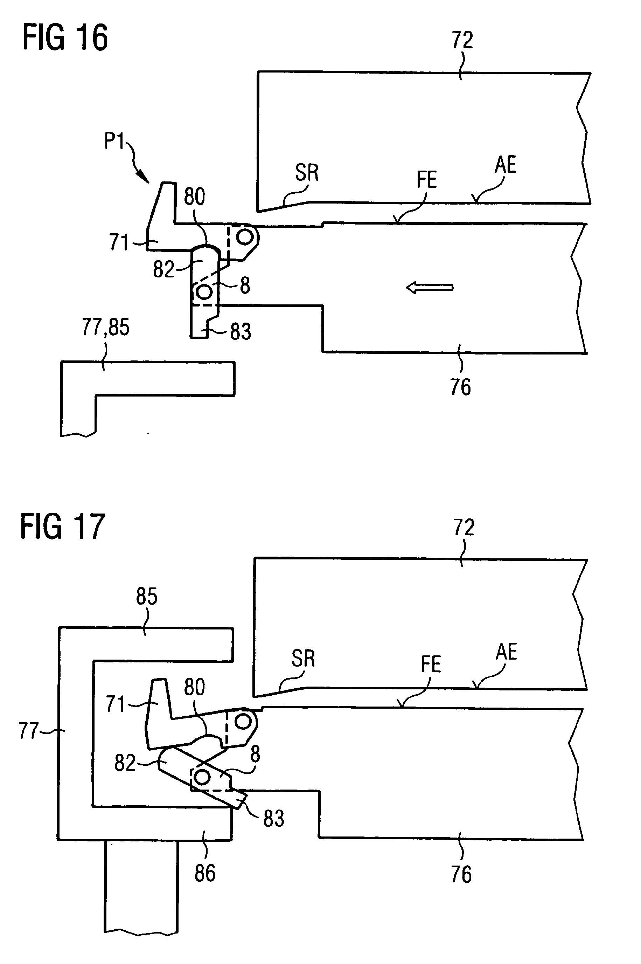

FIG 16 zeigt das freigefahrene Teleskopelement 7. In diesem Fall ist die Absturzsicherung 77 nach unten bewegt. Das Teleskopelement 7 bzw. der Endträger 76 kann nun seitlich zum Ein- und Auslagern oder zum Kommissionieren von Stückgut 2 ausgefahren werden.

FIG 17 zeigt den Mitnehmer 71 beim Entriegeln durch die Absturzsicherung 77. In diesem Fall ist die Absturzsicherung 77 in ihrer eingestellten Höhe so positioniert, dass beispielhaft der untere Anschlag 86 im horizontalen Bewegungsweg des Endträgers 76 liegt. Wird der Endträger 76 nun nach links bewegt, so fährt das nach unten zeigende Entriegelungsende 83 des Drehriegels 8 gegen den Anschlag 86. Der Haken 71 wird entriegelt. Vorzugsweise weist hierzu das Regalbediengerät 6 ein Steuergerät mit ersten Mitteln zum Einstellen eines horizontalen Verfahrweges des jeweiligen Teleskopelementes 7 und zum Einstellen eines vertikalen Verfahrweges der jeweiligen Absturzsicherungen 77 derart auf, dass jeder Mitnehmer 71 des Teleskopelementes 7 individuell in die erste oder zweite Position P1, P2 bewegbar ist, um eine Verriegelung oder Entriegelung des Hakens bzw. des Mitnehmers 71 zu bewerkstelligen.

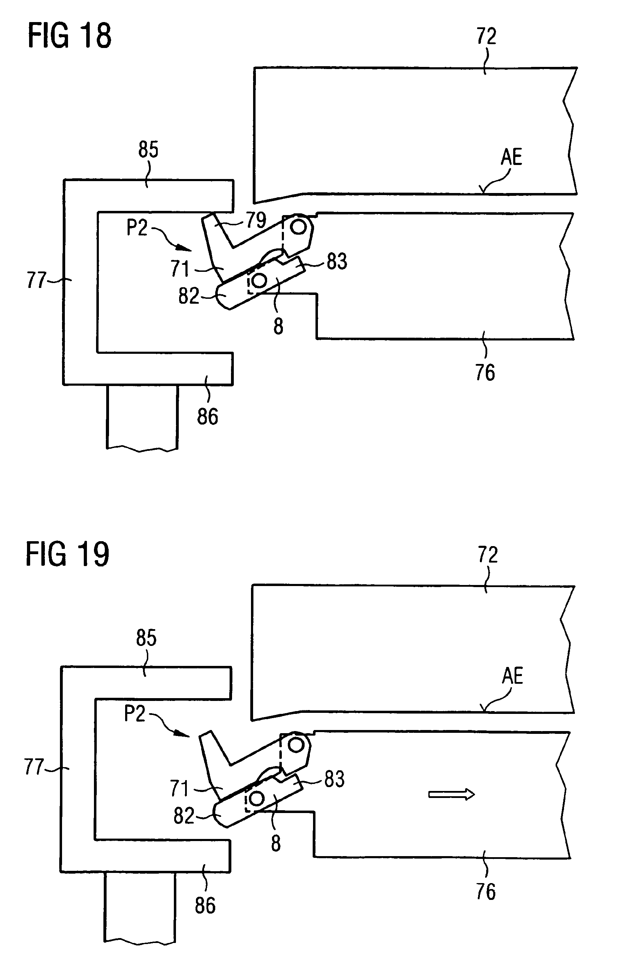

FIG 18 zeigt den Mitnehmer 71 bei einem erzwungenen Niederholen durch die Absturzsicherung 77 in die entriegelte Position P2. Der obere Schenkel 85 der Absturzsicherung 77 ist zu diesem Zweck zugleich als Niederholer ausgebildet, so dass der jeweilige Haken 71 nach unvollständiger Entriegelung durch den Drehriegel 8 zwangsweise über eine Vertikalbewegung der jeweiligen Absturzsicherung 77 nach unten in die zweite Position P2 bewegbar ist. Dadurch kann eine eventuelles Festhaken des Mitnehmers 71, wie z.B. aufgrund einer Verschmutzung, beseitigt werden, sollte der Mitnehmer 71 nicht von sich aus aufgrund seiner Schwerkraft in die zweite abgesenkte Position P2 fallen.

FIG 19 zeigt den Mitnehmer 71 in der entriegelten Position P2 mit kommissionsbereitem Teleskopelement 7. In diesem Fall kann der Endträger 76 nach rechts ausfahren, um beispielsweise eine Gruppe 2c von Getränkekisten 2a aus einem Lagerkanal 12 zu holen. Die in der oberen Stellung befindliche Absturzsicherung 77 verhindert, dass auf dem Abstellplatz 72 bereits aufgeschobene Getränkekisten 2a beim Aufschieben von weiteren Getränkekisten 2a nach links über den Abstellplatz 72 hinaus geschoben werden und dann abstürzen können.

## Patentansprüche

1. Regalbediengerät zum Ein- und Auslagern von Stückgut (2), insbesondere von Getränkekisten,
- wobei das Regalbediengerät ein Fahrwerk (61), eine damit verbundene Tragevorrichtung (62), eine an der Tragevorrichtung (62) befestigte, in Vertikalrichtung (V) verfahrbare Hubvorrichtung (63) und zumindest ein auf der Hubvorrichtung (63) angeordnetes, in Horizontalrichtung (H) und quer zur Fahrtrichtung (F) verfahrbares Teleskopelement (7) aufweist,
- wobei das jeweilige Teleskopelement (7) einen fest mit der Hubvorrichtung (63) verbundenen Grundrahmen (74) und einen relativ zum Grundrahmen (74) verfahrbaren Endträger (76) aufweist,
- wobei an gegenüberliegenden Enden des jeweiligen Endträgers (76) jeweils zumindest ein Mitnehmer (71) zum Schieben des ein- und auszulagernden Stückguts (2) angeordnet ist,
- wobei das jeweilige Teleskopelement (7) einen oberhalb des Grundrahmens (74) angeordneten Abstellplatz (72) zum Zwischenlagern des Stückguts (2) aufweist,
- wobei die jeweiligen Mitnehmer (71) wahlweise in eine ausgefahrene feststehende erste Position (P1) oder in eine eingefahrene abgesenkte zweite Position (P2) bewegbar sind und
- wobei an den sich gegenüberliegenden Enden des Grundrahmens (74) zumindest jeweils eine vertikal bewegbare Absturzsicherung (77) angeordnet ist, welche im eingefahrenen Zustand des jeweiligen Endträgers (76) und in einer oberen vertikalen Stellung der Absturzsicherung (77) jeweils dem zumindest einen Mitnehmer (71) gegenüberliegt.

2. Regalbediengerät nach Anspruch 1,
**dadurch gekennzeichnet,**
**dass** die jeweiligen Absturzsicherungen (77) jeweils mittels eines im Bereich des jeweiligen Endes des Grundrahmens (74) angeordneten ersten Stellgliedes (78) betätigbar sind.

3. Regalbediengerät nach Anspruch 1 oder 2,
**dadurch gekennzeichnet,**
**dass** die jeweiligen Mitnehmer (71) jeweils mittels eines im Bereich des jeweiligen Endes des Endträgers (76) angeordneten zweiten Stellgliedes (73) betätigbar sind.

4. Regalbediengerät nach Anspruch 1 oder 2,
**dadurch gekennzeichnet,**
- **dass** die jeweiligen Mitnehmer (71) als Haken ausgebildet sind, welche an dem jeweiligen Ende des Endträgers (76) schwenkbar gelagert sind,
- **dass** jeweils zumindest ein Drehriegel (8) an dem jeweiligen Ende des jeweiligen Endträgers (76) und benachbart zum jeweiligen Haken (71) drehbar gelagert angeordnet ist und
- **dass** der jeweilige Drehriegel (8) ein Verriegelungsende (82) zum Verriegeln des jeweiligen benachbarten Hakens (71) in der ersten Position (P1) und ein dem Verriegelungsende (82) gegenüberliegendes Entriegelungsende (83) zum Entriegeln des jeweiligen benachbarten Hakens (71) aus der ersten Position (P1) in die zweite Position (P2) aufweist.

5. Regalbediengerät nach Anspruch 4,
**dadurch gekennzeichnet,**
**dass** der jeweilige Haken ein Schwenkteil (87) und ein im Wesentlichen dazu orthogonal angeordnetes Hakenendstück (79) aufweist, dass das Schwenkteil (87) in einem Schwenkpunkt (81) am Ende des jeweiligen Endträgers (76) drehbar gelagert ist und dass das Schwenkteil (87) eine Ausnehmung (80) zum Einrasten des Verriegelungsendes (82) des jeweiligen benachbarten Drehriegels (8) in der ersten Position (P1) aufweist.

6. Regalbediengerät nach Anspruch 4 oder 5,
**dadurch gekennzeichnet,**
**dass** die jeweilige Absturzsicherung (77) zumindest einen Anschlag (85, 86) aufweist, gegen den das jeweilige Ende des jeweiligen Endträgers (76) mittels des Drehriegels (8) in Abhängigkeit von der eingestellten Höhe der jeweiligen Absturzsicherung (77) zum Verriegeln oder zum Entriegeln des jeweiligen Hakens (71) verfahrbar ist.

7. Regalbediengerät nach Anspruch 6,
**dadurch gekennzeichnet,**
**dass** die jeweilige Absturzsicherung (77) jeweils einen unteren und oberen als Anschlag dienenden Schenkel (85, 86) aufweist und dass der obere Schenkel (85) zugleich als Niederholer ausgebildet ist, so dass der jeweilige Haken (71) nach unvollständiger Entriegelung durch den Drehriegel (8) zwangsweise über eine Vertikalbewegung der jeweiligen Absturzsicherung (77) nach unten in die zweite Position (P2) bewegbar ist.

8. Regalbediengerät nach einem der vorangegangenen Ansprüche,
**dadurch gekennzeichnet,**
**dass** das Regalbediengerät ein erstes Teleskopelement (7) mit einer ersten Breite (b1) und ein zweites Teleskopelement (7) mit einer von der ersten Breite (b1) verschiedenen zweiten Breite (b2) zum Ein- und Auslagern sowie zum Kommissionieren von Stückgut (2) mit einer dazu korrespondierenden ersten und zweien Stückgutbreite aufweist.

9. Regalbediengerät nach einem der obigen Ansprüche,
**dadurch gekennzeichnet,**
**dass** das Regalbediengerät ein Steuergerät mit ersten Mitteln zum Einstellen eines horizontalen Verfahrweges des jeweiligen Teleskopelementes (7) und zum Einstellen eines vertikalen Verfahrweges der jeweiligen Absturzsicherungen (77) derart aufweist, dass jeder Mitnehmer (71) des jeweiligen Teleskopelementes (7) individuell in die erste oder zweite Position (P1, P2) bewegbar ist.

10. Regalbediengerät nach einem der vorangegangenen Ansprüche, **dadurch gekennzeichnet,**
**dass** das Regalbediengerät ein Steuergerät mit zweiten Mitteln zum Einstellen der Höhe der Hubvorrichtung (63) für das Ein- und Auslagern sowie für das Kommissionieren des Stückguts (2) sowie dritte Mittel zum Einstellen eines horizontalen Verfahrweges des Regalbediengerätes entlang einer zugehörigen Fahrbahn (FB) aufweist.

11. Lagersystem für Stückgut (2) mit einem als Durchgangslager ausgebildeten und eine Vielzahl von Lagerkanälen (12) aufweisenden Lagerbereich (10) für das Stückgut (2), mit einem Anlieferungs- und Abholungsbereich (4), insbesondere für Paletten mit Getränkekisten, und zumindest einem kundenseitigen Aus- und Rückgabebereich (3) für das Stückgut (2),
**dadurch gekennzeichnet,**
**dass** das Lagersystem zumindest ein Regalbediengerät (6) nach einem der vorangegangenen Ansprüche zum Ein- und Auslagern des Stückguts (2) in bzw. aus den Lagerkanälen (12) und zum Kommissionieren und Bereitstellen des Stückguts (2) an dem jeweiligen Aus- und Rückgabebereich (3) aufweist.

12. Lagersystem nach Anspruch 11,
**dadurch gekennzeichnet,**
- **dass** das Lagersystem zumindest einen ersten Gang (11) aufweist, von dem aus das Einlagern des Stückguts (2) in die Lagerkanäle (12) erfolgt,
- **dass** das Lagersystem zumindest einen zweiten Gang (12) aufweist, von dem aus das Auslagern des eingelagerten Stückguts (2) erfolgt und
- **dass** das Lagersystem zumindest einen Durchgangsbereich (D) aufweist, um für das zumindest eine Regalbediengerät (6) ein Wechseln von einem der ersten zu einem der zweiten Gänge (11, 13) und umgekehrt zu ermöglichen.

13. Lagersystem nach Anspruch 11 oder 12,
**dadurch gekennzeichnet,**
**dass** das Lagersystem ein Getränkemarkt ist und dass es sich bei dem Stückgut (2) um Getränkekisten (2a-2d) handelt.

## Claims

1. Storage and retrieval machine for moving packaged goods (2), in particular drinks boxes, into and out of storage,
- wherein the storage and retrieval unit has running gear (61), a support device (62) connected thereto, a lifting device (63) which is fastened to the support device (62) and can move in a vertical direction (V), and at least one telescopic element (7) which is arranged on the lifting device (63) and can move in a horizontal direction (H) and transversely to the direction of travel (F),
- wherein the respective telescopic element (7) has a base frame (74), which is rigidly connected to the lifting device (63), and an end beam (76) which can move relative to the base frame (74),
- wherein in each case at least one carrier (71) for pushing the packaged goods (2) to be moved into and out of storage is arranged at opposite ends of the respective end beam (76),
- wherein the respective telescopic element (7) has a depositing area (72), arranged above the base frame (74), for intermediate storage of the packaged goods (2),
- wherein the respective carrier (71) can optionally be moved into a extended stationary first position (P1) or into a retracted lowered second position (P2),
- wherein at least one vertically movable fall prevention means (77) is arranged in each case at the opposite ends of the base frame (74) and is situated in each case opposite the at least one carrier (71) when the respective end beam (76) is retracted and in an upper vertical position of the fall prevention means (77).

2. Storage and retrieval machine according to Claim 1, **characterized in that** the respective fall prevention means (77) can in each case be actuated by means of a first control member (78) arranged in the region of the respective end of the base frame (74).

3. Storage and retrieval machine according to Claim 1 or 2, **characterized in that** the respective carriers (71) can in each case be actuated by means of a second control member (73) arranged in the region of the respective end of the end beam (76).

4. Storage and retrieval machine according to Claim 1 or 2, **characterized**
- **in that** the respective carriers (71) are designed as hooks which are pivotably mounted at each end of the end beam (76),
- **in that** at least one rotary latch (8) is in each case arranged, mounted so that it can rotate, at each end of the respective end beam (76) and adjacent to the respective hook (71), and
- **in that** each rotary latch (8) has a locking end (82) for locking the respective adjacent hook (71) in the first position (P1) and an unlocking end (83) opposite the locking end (82) for unlocking the respective adjacent hook (71) from the first position (P1) and placing it in the second position (P2).

5. Storage and retrieval machine according to Claim 4, **characterized in that** each hook has a pivoting part (87) and a hooked end piece (79) arranged essentially orthogonally thereto, **in that** the pivoting part (87) is mounted so that it can rotate at a pivot point (81) at the end of each end beam (76), and **in that** the pivoting part (87) has a recess (80) for latching the locking end (82) of the respective adjacent rotary latch (8) in the first position (P1) .

6. Storage and retrieval machine according to Claim 4 or 5, **characterized in that** each fall prevention means (77) has at least one stop (85, 86) against which each end of each end beam (76) can be moved by means of the rotary latch (8) depending on the height that has been set for the respective fall prevention means (77) in order to lock or unlock the respective hook (71).

7. Storage and retrieval machine according to Claim 6, **characterized in that** each fall prevention means (77) has in each case a lower and an upper limb (85, 86) that serve as stops, and **in that** the upper limb (85) is at the same time designed as a lowering means such that, after incomplete unlocking by the rotary latch (8), each hook (71) can move compulsorily downwards into the second position (P2) by a vertical movement of the respective fall prevention means (77).

8. Storage and retrieval machine according to one of the preceding claims, **characterized in that** the storage and retrieval machine has a first telescopic element (7) with a first width (b1) and a second telescopic element (7) with a second width (b2) that is different from the first width (b1) for moving into and out of storage and for picking packaged goods (2) with a first and second packaged goods width that correspond thereto.

9. Storage and retrieval machine according to one of the preceding claims, **characterized in that** the storage and retrieval machine has a control unit with first means for setting a horizontal path of travel of the respective telescopic element (7) and for setting a vertical path of travel of the respective fall prevention means (77) in such a way that each carrier (71) of the respective telescopic element (7) can move individually into the first or second position (P1, P2).

10. Storage and retrieval machine according to one of the preceding claims, **characterized in that** the storage and retrieval machine has a control unit with second means for setting the height of the lifting device (63) for moving into and out of storage and for picking the packaged goods (2), and third means for setting a horizontal path of travel of the storage and retrieval machine along an associated travel surface (FB) .

11. Storage system for packaged goods (2) comprising a storage area (10) for the packaged goods (2) which is designed as a transit store and has a plurality of storage channels (12), with a delivery and collection area (4), in particular for pallets with drinks boxes, and at least one customer-side dispensing and returns area (3) for the packaged goods (2), **characterized in that** the storage system has at least one storage and retrieval machine (6) according to one of the preceding claims for moving the packaged goods (2) into and out of storage in the storage channels (12) and for picking and supplying the packaged goods (2) to the respective dispensing and returns area (3).

12. Storage system according to Claim 11, **characterized**
- **in that** the storage system has at least one first aisle (11) from which the packaged goods (2) are moved into storage in the storage channels (12),
- **in that** the storage system has at least one second aisle (13) from which the stored packaged goods (2) are moved out of storage, and
- **in that** the storage system has at least one transit area (D) in order to enable the at least one storage and retrieval machine (6) to switch from one of the first to one of the second aisles (11, 13) and vice versa.

13. Storage system according to Claim 11 or 12, **characterized in that** the storage system is a drinks cash-and-carry store and **in that** the packaged goods (2) are drinks boxes (2a-2d).

## Revendications

1. Transstockeur pour charger et décharger de la marchandise ( 2 ) notamment des caisses de boisson,
- dans lequel le transstockeur comporte un chariot ( 61 ), un dispositif ( 62 ) porteur qui y est relié, un dispositif ( 63 ) de levage qui est fixé au dispositif ( 62 ) porteur et qui peut être déplacé dans la direction ( V ) vertical et au moins un élément ( 17 ) télescopique qui est monté sur le dispositif ( 63 ) de levage et qui peut être déplacé dans la direction ( H ) horizontale et transversalement à la direction ( F ) de déplacement,
- dans lequel l'élément ( 7 ) télescopique respectif comporte un bâti ( 74 ) de base assemblé rigidement au dispositif ( 63 ) de levage et une poutrelle ( 76 ) d'extrémité pouvant être déplacée par rapport au bâti ( 74 ) de base,
- dans lequel aux extrémités opposées de la poutrelle ( 76 ) d'extrémité respective est montée respectivement au moins un toc ( 71 ) d'entraînement pour déplacer la marchandise ( 2 ) à charger et à décharger,
- dans lequel l'élément ( 7 ) télescopique respectif comporte un emplacement ( 72 ) de dépose disposé au dessus du bâti ( 74 ) de base pour l'entreposage intermédiaire de la marchandise ( 2 ),
- dans lequel les tocs ( 71 ) d'entraînement respectifs peuvent être mis au choix dans une première position ( P1 ) debout, déployée ou dans une deuxième position ( P2 ) abaissée, escamotée et
- dans lequel aux extrémités opposées du bâti ( 74 ) de base est montée au moins respectivement une sécurité ( 77 ) à l'encontre de la chute, mobile verticalement, qui, lorsque la poutrelle ( 76 ) d'extrémité respective est à l'état escamotée et lorsque la sécurité ( 77 ) vis-à-vis de la chute est dans une position verticale supérieure, est opposée respectivement au au moins un toc ( 71 ) d'entraînement.

2. Transstockeur suivant la revendication 1,
**caractérisé**
**en ce que** les sécurités ( 77 ) vis-à-vis d'une chute peuvent être actionnées respectivement au moyen d'un premier actionneur ( 78 ) monté dans la région de l'extrémité respective du bâti ( 74 ) de base.

3. Transstockeur suivant la revendication 1 ou 2,
**caractérisé**
**en ce que** les tocs ( 71 ) d'entraînement respectifs peuvent être actionnés respectivement au moyen d'un deuxième actionneur ( 73 ) monté dans la région de l'extrémité respective de la poutrelle ( 76 ) d'extrémité.

4. Transstockeur suivant la revendication 1 ou 2,
**caractérisé**
- **en ce que** les tocs ( 71 ) d'entraînement respectifs sont constitués sous la forme de crochets qui sont montés pivotants à l'extrémité respective de la poutrelle ( 76 ) d'extrémité,
- **en ce que** respectivement au moins un verrou ( 8 ) tournant est monté tournant à l'extrémité respective de la poutrelle ( 76 ) d'extrémité respective et au voisinage du crochet ( 71 ) respectif et
- **en ce que** le verrou ( 8 ) tournant respectif a une extrémité ( 82 ) de verrouillage pour verrouiller le crochet ( 71 ) voisin respectif dans la première position ( P1 ) et une extrémité ( 83 ) de verrouillage opposée à l'extrémité ( 82 ) de verrouillage pour déverrouiller le crochet ( 71 ) voisin respectif de la première position ( P1 ) et le faire passer dans la deuxième position ( P2 ).

5. Transstockeur suivant la revendication 4,
**caractérisé**
**en ce que** le crochet respectif comporte une partie (87) pivotante et une pièce ( 79 ) de crochet qui y est sensiblement orthogonale, en ce que la partie ( 87 ) pivotante est montée tournante en un point ( 81 ) de pivotement à l'extrémité de la poutrelle ( 76 ) d'extrémité respective et en ce que la partie ( 87 ) de pivotement comporte un évidement ( 80 ) pour l'encliquetage de l'extrémité ( 82 ) de verrouillage du verrou ( 8 ) tournant voisin respectif dans la première position ( P1 ).

6. Transstockeur suivant la revendication 4 ou 5,
**caractérisé**
**en ce que** la sécurité ( 77 ) respective vis-à-vis de la chute comporte au moins une butée ( 85, 86 ) sur laquelle l'extrémité respective de la poutrelle ( 76 ) d'extrémité respective peut venir au moyen du verrou ( 8 ) tournant en fonction de la hauteur réglée de la sécurité ( 77 ) respective vis-à-vis de la chute pour le verrouillage ou le déverrouillage du crochet ( 71 ) respectif.

7. Transstockeur suivant la revendication 6,
**caractérisé**
**en ce que** la sécurité ( 77 ) respective vis-à-vis de la chute comporte respectivement une branche ( 85, 86 ) en haut et en bas servant de butée et en ce que la branche ( 85 ) supérieure est formée en même temps en tant que dispositif serrant vers le bas de sorte que le crochet ( 71 ) respectif peut être déplacé obligatoirement pour venir vers le bas dans la deuxième position ( P2 ) par l'intermédiaire d'un mouvement vertical de la sécurité ( 77 ) respective vis-à-vis de la chute.

8. Transstockeur suivant l'une des revendications précédentes,
**caractérisé**
**en ce que** le transstockeur comporte un premier élément ( 7 ) télescopique ayant une première largeur ( b1 ) et un deuxième élément ( 7 ) télescopique ayant une deuxième largeur ( b2 ) différente de la première largeur ( b1 ) pour le chargement et le déchargement ainsi que pour la préparation de la marchandise ( 2 ) ayant une première et une deuxième largeurs y correspondant.

9. Transstockeur suivant l'une des revendications précédentes,
**caractérisé**
**en ce que** le transstockeur comporte un appareil de commande ayant des premiers moyens de réglage d'un trajet de déplacement horizontal de l'élément ( 7 ) télescopique respectif et de réglage d'un trajet de déplacement vertical des sécurités ( 7 ) respectives vis-à-vis de la chute de manière à ce que chaque toc ( 71 ) d'entraînement de l'élément ( 7 ) télescopique respectif puisse venir individuellement dans la première ou dans la deuxième position ( P1, P2 ).

10. Transstockeur suivant l'une des revendications précédentes,
**caractérisé**
**en ce que** le transstockeur comporte un appareil de commande ayant des deuxièmes moyens de réglage de la hauteur du dispositif ( 63 ) de levage pour le chargement et le déchargement ainsi que pour la préparation de la marchandise ( 2 ) ainsi que des troisièmes moyens de réglage d'un trajet de déplacement horizontal du transstockeur le long d'une voie ( FB ) de déplacement qui lui appartient.

11. Système de stockage de marchandise ( 2 ) comprenant une zone ( 10 ) de stockage de la marchandise ( 2 ) constituée en stockage traversant et ayant une pluralité de canaux ( 12 ) de stockage comprenant une zone ( 4 ) de livraison et de reprise, notamment pour des palettes ayant des caisses de boisson, et au moins une zone de sortie et de retour du côté du client pour la marchandise ( 2 ),
**caractérisé**
**en ce que** le système de stockage comporte au moins un transstockeur ( 6 ) suivant l'une des revendications précédentes pour charger et décharger de la marchandise dans et hors des canaux ( 12 ) de stockage et pour préparer et mettre à disposition la marchandise ( 2 ) sur la zone ( 3 ) respective de sortie et de retour.

12. Système de stockage suivant la revendication 11,
**caractérisé**
- **en ce que** le système de stockage comporte au moins une première allée ( 11 ) à partir de laquelle s'effectue le chargement de la marchandise ( 2 ) dans les canaux ( 12 ) de stockage,
- **en ce que** le système de stockage comporte au moins une deuxième allée ( 12 ) de laquelle s'effectue le déchargement de la marchandise de stockée et
- **en ce que** le système de stockage comporte au moins une zone ( D ) de passage pour permettre au au moins un transstockeur ( 6 ) de passer de l'une des premières allées ( 11, 13 ) à l'une des deuxième allées ( 11, 13 ) et vice et versa.

13. Système de stockage suivant la revendication 11 ou 12,
**caractérisé**
**en ce que** le système de stockage est un marché aux boissons et en ce que la marchandise ( 2 ) est constituée de caisses ( 2a à 2d ) de boisson.
